# EUROPÄISCHE PATENTSCHRIFT

(11) **EP 3 362 246 B1**
(45) Veröffentlichungstag und Bekanntmachung des Hinweises auf die Patenterteilung: **26.08.2020**
(21) Anmeldenummer: 16790280.8
(22) Anmeldetag: 12.10.2016
(51) Int. Cl.: B29C 45/14, B29C 45/16

(54) **VERFAHREN ZUM VERBINDEN ZWEIER BAUTEILE UNTERSCHIEDLICHER MATERIALIEN**
PROCESS FOR CONNECTING TWO COMPONENTS OF DIFFERENT MATERIALS
PROCÉDÉ DE CONNECTION DEUX ÉLÉMENT DE MATERIAU DIFFERENT

(30) Priorität: 13.10.2015 DE 102015219798
(43) Veröffentlichungstag der Anmeldung: 22.08.2018
(73) Patentinhaber: TESA SE, 22848 Norderstedt (DE)
(72) Erfinder: FUSSELIER, Arnaud, 77240 Cesson (FR); BALBO-BLOCK, Marco, 22043 Hamburg (DE)
(86) Internationale Anmeldenummer: PCT/EP2016/074490
(87) Internationale Veröffentlichungsnummer: WO 2017/064130

(56) Entgegenhaltungen:
- DE-A1- 4 109 397
- JP-B2- 3 016 331
- KR-A- 20130 100 952
- US-A1- 2006 090 842
- US-A1- 2010 233 452
- US-A1- 2011 089 792
- US-A1- 2015 050 453

## Beschreibung

Die vorliegende Erfindung betrifft ein Verfahren zum Verbinden zweier Bauteile unterschiedlicher Materialien wie zum Beispiel Metall-Kunststoff oder Kunststoff-Kunststoff.

Metall-Kunststoff- und Kunststoff-Kunststoff-Verbundwerkstoffe finden unter anderem im (Automobil-)Leichtbau immer größere Verbreitung. Auch können Kunststoffoberflächen durch Metalldekorelemente veredelt werden.

Metallelemente, zum Beispiel Bleche, können an den fertigen Kunststoffpartner geklebt oder anderwärtig gefügt werden (zusätzlicher Arbeitsschritt). Anderseits kann das Metallelement in einem Spritzgussprozess in einer Form vorgegeben und mit einer flüssigen Kunststoffmasse umspritzt oder hinterspritzt werden.

Details zum Spritzgießen lassen sich dem Chemielexikon Römpp entnehmen, und zwar unter dem Stichwort "Spritzgießen" (2013 Georg Thieme Verlag, Dokumentkennung RD-19-03499, letzte Aktualisierung: Juli 2011).

Dokument WO 03 061 941 offenbart einen Haftkleber bzw. eine Haftklebervorstufe, die an eine Bauteil angespritzt wird. Der Haftkleber auf der Ausseneite dient zum späteren Ankleben an ein Objekt. Die Haftklebervorstufe kann dabei zum Aufschäumen gebracht werden.

Dokument JP 2010 194 762 zeigt ein Metallteil , auf das eine doppelseitiges, aus polymerem Schaum bestehendes Klebeband aufgebracht ist, und dass in Folge auf dieser Seite mit einem Kunststoff hinterspritzt wird.

Im Allgemeinen ist im Spritzgussprozess die Adhäsion zwischen Kunststoffen und Metall schlecht bis sehr schlecht, insbesondere bei unpolaren Kunstoffen. Für den mechanischen Zusammenhalt beider Materialien sorgt ein formschlüssige (Ineinandergreifen, Umspritzung) oder kraftschlüssige (Presspassung) Verbindung; dies ist insbesondere bei außenanliegenden Metallelementen wie beim Hinterspritzprozess schwierig. Durch Schwindungen und Verzügen im Abkühlschritt des Spritzgussprozesses kann es zwischen Metall und Kunststoff zu Spannungen kommen und letztendlich zu Riss- oder Spaltbildung. Generell sind Kraftübertragungen zwischen beiden Materialien sowie die Dichtigkeit gegen Flüssigkeiten begrenzt. Auch die mechanische und thermische Beanspruchung kann den Zusammenhalt erniedrigen und zu vielfältigen Materialermüdungen führen. Daher ist eine stoffschlüssige (adhäsive) Verbindung zwischen Metall und Kunststoff stets zu bevorzugen.

Eine adhäsive Verbindung erhöht somit die Gesamtfestigkeit, Langlebigkeit und Dichtigkeit des Verbundes, indem Spannungsspitzen dissipiert und mechanisch/thermisch induzierte Verformungsunterschiede ausgeglichen werden. Eine adhäsive Verbindung kann durch verschiedene Ansätze erreicht werden. Klassisch kann die Metallfläche (bevorzugt kurz vor Verbundherstellung oder direkt in der Spritzgussform) mit einer physikalischen oder chemischen Methode vorbehandelt werden. Das kann einerseits eine Plasmabehandlung o.ä. sein, andererseits kann die Metalloberfläche mit einem chemischen Primer oder einem Flüssigklebstoff behandelt oder mit einer Lackierung oder sonstigen (Kunststoff-)Beschichtung ausgerüstet werden. Alle Varianten sind entweder händisch aufwendig, investitionsintensiv und/oder gesundheitsbedenklich. Mit Plasma erzeugt man keine elastische/ausgleichende Zwischenschicht, außerdem ist eine Absaugung zum Abführen von Ozon und anderen Gasen nötig. Ein Primer hat den Nachteil, dass er nach Applikation trocknen muss (flash-off-Zeit) und wegen der verdampfenden Lösemittel gesundheitsschädlich sein kann. Flüssige Kleber brauchen auch eine gewisse Zeit zum Aushärten, sind potentiell gesundheitsschädlich und können in der Form durch zu viel Druck "rausquetschen" und sich über die vorgesehene Verklebungsfläche hinaus ausbreiten.

Aufgabe der vorliegenden Erfindung ist, ein optimiertes Verfahren zur Herstellung eines Metall-Kunststoff-Verbunds beziehungsweise eines Kunststoff-Kunststoff-Verbunds anzugeben.

Gelöst wird diese Aufgabe durch ein Verfahren, wie es im Hauptanspruch niedergelegt ist. Gegenstand der Unteransprüche sind vorteilhafte Weiterentwicklungen des Erfindungsgegenstandes.

Demgemäß beschreibt die Erfindung ein Verfahren zur Herstellung eines Metall-Kunststoff-Verbunds, umfassend die folgenden Schritte:
- Applizieren eines Klebebands auf die zu verklebende Oberfläche eines Metallteils
- Einlegen des Metallteils in eine geschlossene, bevorzugt zweiteilige Hohlform
- Einspritzen des thermoplastischen Kunststoffes in die Hohlform, so dass das Klebeband vom Kunststoff umschlossen ist
   * Aufschäumen des Klebebands
- Entnehmen des Metall-Kunststoff-Verbunds aus der Hohlform Alternativ kann erfindungsgemäß auch ein Kunststoff-Kunststoff-Verbund nach denselben Schritten hergestellt werden:
   - Applizieren eines Klebebands auf die zu verklebende Oberfläche eines Kunststoffteils
   - Einlegen des Kunststoffteils in eine geschlossene, bevorzugt zweiteilige Hohlform
   - Einspritzen des zweiten thermoplastischen Kunststoffes in die Hohlform, so dass das Klebeband vom zweiten Kunststoff umschlossen ist
      * Aufschäumen des Klebebands
   - Entnehmen des Kunststoff-Kunststoff-Verbunds aus der Hohlform

Wenn im Folgenden von einem Metall-Kunststoff-Verbund gesprochen, ist gleichzeitig auch ein Kunststoff-Kunststoff-Verbund gemeint.

Erfindungsgemäß wirkt das Klebeband als Haftvermittler im Metall-Kunststoff-Spritzgussprozess. Damit können Verbundwerkstoffe in gleichzeitig höchster Produktperformance, -qualität, -sicherheit und -wirtschaftlichkeit hergestellt werden. Auch neuartige Verbundbauteile und -geometrien sind damit möglich. Der Prozess ist verlässlich, sauber, kommt ohne Abluftvorrichtung und Nachbearbeitung aus. Die Klebebandapplizierung kann zeitlich und räumlich vom Spritzgussprozess entkoppelt und sogar geoutsourct werden.

Erfindungsgemäß wird das Klebeband wird auf die zu verklebende Metalloberfläche appliziert. Anschließend wird das Metallelement in die Spritzgussform gelegt (bei Hinterspritzung mit der Klebebandseite nach Innen in die Form zeigend) und der Spritzgussschritt durchgeführt. Sobald das Verbundbauteil aus der Form entnommen wird, ist eine Mindesthaftung zwischen Metall und Kunststoff vorhanden. Vorzugsweise erhöht sich noch die Haftung und/oder Kohäsion der Verklebung nach einer gewissen Nachhärtezeit und/oder mit einem Nachbehandlungsschritt.

Als Klebebänder im erfindungsgemäßen Sinne sollen dabei alle ein- oder beidseitig mit Klebmasse beschichteten flächigen oder bandförmigen Trägergebilde verstanden werden, also neben klassischen Bändern auch Etiketten, Abschnitte, Stanzlinge (gestanzte mit Klebemasse beschichtete flächige Trägergebilde), zweidimensional ausgedehnte Gebilde (zum Beispiel Folien) und dergleichen, auch Mehrschichtanordnungen.
Des Weiteren umfasst der Ausdruck "Klebeband" auch so genannte "Transferklebebänder", das heißt ein Klebeband ohne Träger. Bei einem Transferklebeband ist die Klebemasse vielmehr vor der Applikation zwischen flexiblen Linern aufgebracht, die mit einer Trennschicht versehen sind und/oder anti-adhäsive Eigenschaften aufweisen. Zur Applikation wird regelmäßig zunächst ein Liner entfernt, die Klebemasse appliziert und dann der zweite Liner entfernt.
Das Klebeband kann in festen Längen wie zum Beispiel als Meterware oder aber als Endlosware auf Rollen (archimedische Spirale) zur Verfügung gestellt werden.

Das Klebeband muss eine gewünschte Haftung zur Metalloberfläche haben und den Spritzgussprozess ohne übermäßige negative Veränderungen überstehen. Grundsätzlich können sowohl einseitige als auch doppelseitige Klebebänder eingesetzt werden. Einseitige Klebebänder besitzen dann bevorzugt eine raue und/oder offenporige Oberfläche (zur mechanischen Adhäsion) oder einen Träger, der eine Mindestkompatibilität zu dem Spritzkunststoff zeigt. Bevorzugt werden jedoch doppelseitige oder trägerlose Klebebänder. Besonders bevorzugt werden sogenannte reaktive Klebebänder, aber auch thermoplastische Klebebänder mit oder ohne Träger sind möglich. Reaktive Klebebänder enthalten chemisch reaktive, latente Molekülgruppen, die unter den Spritzgussbedingungen in der Form (Druck, Temperatur, Zeit) untereinander und/oder mit dem Kunststoff/Metall reagieren und somit ein molekulares Netzwerk untereinander und/oder zum Substrat aufbauen. Alternativ kann die Reaktion des Klebebandes auch vor dem Spritzgussschritt durch einen äußeren Stimulus gestartet werden (Licht, UV-Strahlung, Plasma, Zuführen eines Initiators in Form einer Lösung oder eines zweiten, komplementären Klebebandes, u.a.).

Die Formulierung und Aufbau des Klebebandes und damit seine Polarität (Kunststoff/MetalI-Affinität), Reaktionsbedingungen und -chemie können an die gewünschten Spritzgussbedingungen/Kunststoff- und Metallauswahl angepasst werden. Idealerweise besitzt das Klebeband eine Polarität/Chemie, die mit beiden zu verklebenden Substraten kompatibel ist und somit zwischen großen Unterschieden zwischen Metall und Kunststoff vermittelnd wirkt.

Mögliche reaktive Klebebandklassen sind zum Beispiel Epoxy-, Acrylat-, Phenolformaldehydharz- oder Isocyanat-haltige Klebebänder. Das Klebeband kann auch aus einer Abmischung zweier Chemieklassen bestehen, die jede für sich eine optimale Haftung an jeweils ein Substrat ermöglichen.

Mögliche Metallelemente können aus Stahl oder Aluminium sein.

Mögliche Spritzgusskunststoffe können beliebige thermoplastische oder duroplastische Kunststoffe sein, unter anderem ABS, PP, PA, PUR.

Das Klebeband ist aufschäumbar ausgerüstet und kann gegebenenfalls :
- elastische und/oder viskoelastische Eigenschaften zeigen, um Spannungen zusätzlich auszugleichen.
- einen Träger oder Gelege zum Beispiel zur Verhinderung von Fließphänomenen enthalten.
- aus mehreren Schichten, zum Beispiel funktionalen Schichten, sowie symmetrisch oder unsymmetrisch (in jede Dimensionsrichtung) aufgebaut sein.
- unterschiedliche Dicken innerhalb der Verklebungsfläche und ebene oder unebene, strukturierte oder nicht-strukturierte (Oberflächen-)Topographien besitzen.
- ganzflächig oder teilflächig sowie zeitlich beliebig vor oder während des Prozesses appliziert werden.

Der vorgestellte Einsatz von Klebebändern kann mit bekannten Oberflächenvorbehandlungen wie Plasma- oder Primervorbehandlungen kombiniert werden.

Das Prinzip ist nicht nur für Metall-Kunststoff-Verbundwerkstoffe einsetzbar, sondern - wie es erfindungsgemäß festgestellt worden ist - zum Beispiel auch dann geeignet, wenn zwei sehr unterschiedliche Kunststoffe in einem Spritzgussprozess verbunden werden sollen.

Im Folgenden soll die Erfindung anhand mehrerer Beispiele näher erläutert werden, ohne damit eine wie auch immer geartete Einschränkung hervorrufen zu wollen.

### Metall-Kunststoff-Verbund

Eine Spritzguß-Kunststoffplatte (4) aus Polyamid soll mit einem Stahlrahmen ausgerüstet werden, so dass das gesamte Bauteil verschraubt und verschweißt werden kann. Ein Beispiel für dieses Bauteil ist die Ersatzreifenhalterung aus Kunststoff unter dem Kofferraum, die mechanisch an die Karosserie verschweißt werden soll.

Ein tesa® HAF 8400, also ein reaktives Haftvermittlerklebeband (3), wird einseitig auf den Stahlrahmen vorappliziert und der Stahlrahmen mit Klebeband in eine geeignete Spritzgussform gelegt (mit der Klebebandseite nach innen gerichtet).
tesa® HAF 8400 ist eine hitzeaktivierbare Folie auf Basis von Nitrilkautschuk und Phenolharz ohne Träger .Es ist mit einem festen Papierliner abgedeckt. Bei Raumtemperatur ist das Material nicht klebend. Die Aktivierungstemperatur zur Vorfixierung liegt bei ca. 90 °C. In einem zweiten Verarbeitungsschritt wird das Produkt unter Zuführung von Druck und Hitze appliziert.

In die geschlossene Form (1) wird das flüssige, heiße Polyamid reingespritzt (2). Durch die hohe Temperatur und hohen Druck in der nun ausgefüllten Form vernetzt das tesa® HAF 8400 und verankert sowohl mit der Metall- als auch der Polyamidgrenzschicht. Nach Verfestigen des Polyamids kann das Bauteil aus der Form genommen werden. Der Stahlrahmen und das erstarrte Polyamid sind nun durch das tesa® HAF 8400 derart verbunden, dass höhere Kräfte aufgenommen werden können, als im Falle ohne HAF-Haftvermittler.

In einer alternativen Ausführungsform ein röhrenförmiges Metallelement (5) mit Klebebandhaftvermittler (3) in einer Form umspritzt.

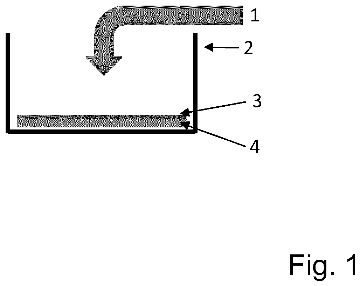

Anhand der nachfolgend beschriebenen Figuren werden besonders vorteilhafte Ausführungsformen der Erfindung näher erläutert. Es zeigen
- Figur 1: ein flächiges Kunststoffelement mit Klebebandhaftvermittler, das in einer Form hinterspritzt wird, und

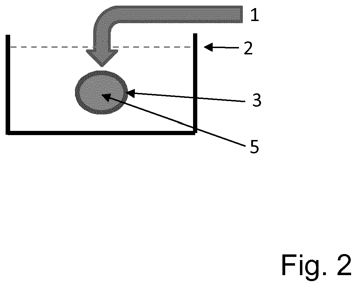

- Figur 2: ein röhrenförmiges Metallelement mit Klebebandhaftvermittler, das in einer Form umspritzt wird.

## Patentansprüche

1. Verfahren zur Herstellung eines Metall-Kunststoff-Verbunds, umfassend die folgenden Schritte:
• Applizieren eines Klebebands auf die zu verklebende Oberfläche eines Metallteils
• Einlegen des Metallteils in eine geschlossene, bevorzugt zweiteilige Hohlform
• Einspritzen des thermoplastischen Kunststoffes in die Hohlform, so dass das Klebeband vom Kunststoff umschlossen ist
• Aufschäumen des Klebebands
• Entnehmen des Metall-Kunststoff-Verbunds aus der Hohlform

2. Verfahren zur Herstellung eines Kunststoff-Kunststoff-Verbunds, umfassend die folgenden Schritte:
• Applizieren eines Klebebands auf die zu verklebende Oberfläche eines Kunststoffteils
• Einlegen des Kunststoffteils in eine geschlossene, bevorzugt zweiteilige Hohlform
• Einspritzen des zweiten thermoplastischen Kunststoffes in die Hohlform, so dass das Klebeband vom zweiten Kunststoff umschlossen ist
• Aufschäumen des Klebebands
• Entnehmen des Kunststoff-Kunststoff-Verbunds aus der Hohlform

3. Verfahren nach Anspruch 1 oder 2,
**dadurch gekennzeichnet, dass**
das Klebeband doppelseitig oder trägerlos ist.

4. Verfahren nach zumindest einem der Ansprüche 1 bis 3,
**dadurch gekennzeichnet, dass**
das Klebeband ein reaktives Klebeband ist.

## Claims

1. Process for the production of a metal-plastics composite, comprising the following steps:
• application of an adhesive tape to the metal-component surface that is to be adhesive-bonded
• insertion of the metal component into a closed, preferably two-part hollow mould
• injection of the thermoplastic into the hollow mould in a manner such that the plastic encloses the adhesive tape
• foaming of the adhesive tape
• removal of the metal-plastics composite from the hollow mould.

2. Process for the production of a plastics-plastics composite, comprising the following steps:
• application of an adhesive tape to the plastics-component surface that is to be adhesive-bonded
• insertion of the plastics component into a closed, preferably two-part hollow mould
• injection of the second thermoplastic into the hollow mould in a manner such that the second plastic encloses the adhesive tape
• foaming of the adhesive tape
• removal of the plastics-plastics composite from the hollow mould.

3. Process according to Claim 1 or 2,
**characterized in that**
the adhesive tape is double-sided or has no carrier.

4. Process according to at least one of Claims 1 to 3,
**characterized in that**
the adhesive tape is a reactive adhesive tape.

## Revendications

1. Procédé pour la préparation d'un composite métal-plastique, comprenant les étapes suivantes :
• application d'un ruban adhésif sur la surface devant être collée d'une pièce métallique
• introduction de la pièce métallique dans un moule creux fermé, préférablement en deux parties
• injection du plastique thermoplastique dans le moule creux, de sorte que le ruban adhésif soit entouré par le plastique
• moussage du ruban adhésif
• sortie du composite métal-plastique du moule creux.

2. Procédé pour la préparation d'un composite plastique-plastique, comprenant les étapes suivantes :
• application d'un ruban adhésif sur la surface devant être collée d'une pièce de plastique
• introduction de la pièce de plastique dans un moule creux fermé, préférablement en deux parties
• injection du deuxième plastique thermoplastique dans le moule creux, de sorte que le ruban adhésif soit entouré par le deuxième plastique
• moussage du ruban adhésif
• sortie du composite plastique-plastique du moule creux.

3. Procédé selon la revendication 1 ou 2, **caractérisé en ce que** le ruban adhésif est à double face ou non supporté.

4. Procédé selon au moins l'une des revendications 1 à 3, **caractérisé en ce que** le ruban adhésif est un ruban adhésif réactif.
